(19)

**Europäisches Patentamt**
**European Patent Office**
**Office européen des brevets**

(11) **EP 4 438 758 B1**

(12) **EUROPEAN PATENT SPECIFICATION**

(45) Date of publication and mention
of the grant of the patent:
**03.06.2026 Bulletin 2026/23**

(21) Application number: **23739958.9**

(22) Date of filing: **09.01.2023**

(51) International Patent Classification (IPC):
C22C 38/12 (2006.01)    C22C 38/32 (2006.01)
C21D 8/10 (2006.01)    B32B 15/18 (2006.01)
B32B 1/08 (2006.01)    C22C 38/44 (2006.01)
C22C 38/38 (2006.01)    C22C 38/04 (2006.01)
C22C 38/14 (2006.01)    C22C 38/28 (2006.01)
C21D 8/0247 (2026.01)    C22C 38/08 (2006.01)
C21D 9/08 (2006.01)    C22C 38/26 (2006.01)
C21D 9/46 (2006.01)    C21D 8/0221 (2026.01)
C21D 6/00 (2006.01)    B23K 20/04 (2006.01)
B32B 15/01 (2006.01)    C21D 1/02 (2006.01)

(52) Cooperative Patent Classification (CPC):
B23K 20/04; B32B 1/08; B32B 15/011;
B32B 15/18; C21D 1/02; C21D 6/004; C21D 8/02;
C21D 8/0226; C21D 8/0236; C21D 8/0263;
C21D 8/0273; C21D 8/10; C21D 9/08; C21D 9/46;
C22C 38/001;                                    (Cont.)

(86) International application number:
**PCT/CN2023/071256**

(87) International publication number:
**WO 2023/134616 (20.07.2023 Gazette 2023/29)**

(54) **OZONE CORROSION RESISTANT HIGH-STRENGTH TUBE AND MANUFACTURING METHOD THEREFOR**

OZONKORROSIONSBESTÄNDIGES HOCHFESTES ROHR UND HERSTELLUNGSVERFAHREN DAFÜR

TUBE À HAUTE ROBUSTESSE RÉSISTANT À LA CORROSION PAR OZONE ET PROCÉDÉ DE FABRICATION POUR CELUI-CI

(84) Designated Contracting States:
**AL AT BE BG CH CY CZ DE DK EE ES FI FR GB
GR HR HU IE IS IT LI LT LU MC ME MK MT NL
NO PL PT RO RS SE SI SK SM TR**

(30) Priority: **13.01.2022 CN 202210038703**

(43) Date of publication of application:
**02.10.2024 Bulletin 2024/40**

(73) Proprietor: **BAOSHAN IRON & STEEL CO., LTD.**
**Shanghai 201900 (CN)**

(72) Inventors:
• **YAN, Bo**
**Shanghai 201900 (CN)**

• **JIAO, Sihai**
**Shanghai 201900 (CN)**
• **WANG, Zhiyu**
**Shanghai 201900 (CN)**
• **LI, Zhanjie**
**Shanghai 201900 (CN)**

(74) Representative: **Maiwald GmbH**
**Elisenhof**
**Elisenstraße 3**
**80335 München (DE)**

(56) References cited:
WO-A1-2021/104417    CN-A- 107 143 702
CN-A- 109 306 436    CN-A- 112 359 295
JP-A- 2019 527 296    JP-A- H01 152 218
US-A1- 2019 219 218

(52) Cooperative Patent Classification (CPC): (Cont.)
**C22C 38/004; C22C 38/02; C22C 38/04;**
**C22C 38/08; C22C 38/12; C22C 38/14;**
**C22C 38/26; C22C 38/28; C22C 38/32;**
**C22C 38/38; C22C 38/44; C22C 38/58;**
C21D 2211/001; C21D 2211/002; C21D 2211/005;
C21D 2211/009; C21D 2251/02

**Description**

**TECHNICAL FIELD**

The present disclosure relates to a tube and a manufacturing method therefor, in particular to an ozone corrosion resistant high-strength tube and a manufacturing method therefor.

**BACKGROUND ART**

As is well known, in current water supply plants, ozone is typically used to disinfect and sterilise the water source to ensure the water quality. In practical applications, pipelines between ozone generators and ozone dosing devices in water supply plants are typically in direct contact with ozone gas. Water outlet pipes of a pre-ozone contact tank and an ozone contact tank are also in contact with water in which ozone is dissolved. If these equipment and pipelines are not specially treated, they are very susceptible to ozone corrosion. Therefore, in order to prevent these equipment and pipelines from being corroded by ozone as much as possible, the equipment and pipelines are generally produced and manufactured using carbon steel materials and 316 stainless steel materials at present.

However, compared with the carbon steel materials, the strength of the 316 stainless steel structure is lower, and under the same operating conditions, a larger thickness is required, which will lead to an increase in the amount of materials used. At the same time, welding, machining and the like using the 316 stainless steel are more difficult. In addition, the 316 stainless steel itself contains more valuable metal elements such as Cr, Ni, and Mo, which will lead to an increase in use costs during production, manufacturing, and installation. During the use of 316L stainless steel with a conventional composition, local material corrosion will occur, primarily due to insufficient comprehensive corrosion ability in an WO 2021/104417 discloses a manufacturing method for a carbon steel and austenitic stainless steel rolling clad plate, comprising the steps of: (1) obtaining a blank material of a carbon steel layer and a blank material of a stainless steel layer; (2) assembling blank materials; (3) cladding and rolling; (4) cold rolling; (5) first annealing; and (6) second annealing. JP H01-152218 describes a clad steel pipe 1 having ≤1 inch wall thickness and consisting of the outer layer 2 of the carbon steel containing ≤1.0wt.% Ni, ≤0.43% carbon equivalent = C+Mn/6+(Cr+Mo+V)/5+(Ni+Cu)/15, and the substantial balance Fe or of low-alloy steel and the inner layer 3 of austenitic stainless steel or of ferrite-austenite stainless steel is previously homogenized, as required, and then heat-treated.

Accordingly, carbon steel tubes are also commonly manufactured from carbon steel materials, and such carbon steel tubes can be used as the water outlet pipes behind valves of the pre-ozone contact tank and the ozone contact tank, and water transported in the pipelines contains a small amount of residual ozone. In order to enhance the corrosion resistance of inner walls of the pipelines, the measures of applying specialized ozone-resistant fluorocarbon coatings on the inner walls are generally adopted. However, due to the problems such as damage and peeling of the coating on the inner walls of the pipelines, the carbon steel pipes are still inevitably corroded by ozone during long-term use and operation, resulting in water pollution, and even pipeline leakage and explosion.

Based on this, in view of the above deficiencies and defects in the prior art, the present disclosure intends to provide a new tube having excellent ozone corrosion resistance as well as good mechanical properties and economic efficiency, exhibiting great economic and social benefits.

**SUMMARY OF INVENTION**

One of the objects of the present disclosure is to provide a tube that not only has excellent ozone corrosion resistance, but also has good mechanical properties and high economic efficiency, which can solve the essential pain point of 316 stainless steel or carbon steel used for water supply plants in the ozone corrosive medium environment, meet the increasing demands of pipelines and equipment used by the water supply plants in the ozone corrosive medium environment for corrosion resistance and mechanical properties, and greatly improve the applicability, safety and durability of these pipelines and equipment while avoiding secondary pollution to water, having great economic and social benefits.

In order to achieve the above object, the present disclosure provides a tube, having a corrosion resistant layer and a base layer in a thickness direction, wherein the corrosion resistant layer is at least located on the inner wall of the tube, the corrosion resistant layer has a thickness accounting for 0.5% to 20% of a total thickness of the tube, and the corrosion resistant layer further contains the following chemical elements in percentage by mass:

$$0 < C \leq 0.08\%;$$

$$0 < Si \leq 0.75\%;$$

$$0 < Mn \leq 2.0\%;$$

Ni: 10.00-14.00%;
Cr: 16.00-18.00%;
Mo: 2.00-3.00%; and
N: 0.02-0.20%;
the balance being Fe and inevitable impurities, wherein the inevitable impurities comprise: S≤0.030%; and P≤0.045%;
wherein Cr, Mo and N satisfy the following inequation: Cr+3.3×Mo+16×N≥25%,
the chemical elements of the base layer in percentage by mass are:

C: 0.01-0.20%;
Si: 0.10-0.50%;
Mn: 0.50-2.00%;
Al: 0.02-0.04%;
Ti: 0.005-0.018%;
Nb: 0.005-0.020%;

$$N \leq 0.006\%;$$

and
further including at least one of:

$$0 < B \leq 0.0003\%;$$

$$0 < Ni \leq 0.20\%;$$

$$0 < Cr \leq 0.20\%;$$

and

$$0 < Mo \leq 0.10\%$$

the balance being Fe and inevitable impurities, wherein the inevitable impurities comprise: S≤0.010%; and P≤0.015%;
the base layer has a microstructure of ferrite + pearlite or ferrite + pearlite + bainite; and the corrosion resistant layer has a microstructure of austenite.

In order to ensure the ozone corrosion resistance of the tube, the ozone corrosion resistance of the corrosion resistant layer needs to be firstly ensured.

In current water supply plants, the pipelines between ozone generators, and ozone dosing devices will transport or come into contact with 100% ozone gas as the medium. The flanges, blind sheets, outlet pipes, and other facilities in the pre-ozone contact tank and the ozone contact tank will transport or come into contact with water containing 1mg/L to 3mg/L of dissolved ozone as the medium, and the water may also contain up to 5ppm of Cl⁻. The main corrosive medium is ozone, and the operating temperature ranges from 0 to 40 °C.

Based on the above-mentioned operating conditions of the pipelines and equipment used by the water supply plants in the ozone corrosion medium environment at present, the inventors have conducted a lot of research and performed optimised design on the chemical element composition of the corrosion resistant layer to ensure the ozone corrosion resistance of the corrosion resistant layer.

In the present disclosure, the design principle of the chemical elements in the corrosion resistant layer is as follows.

C: in the corrosion resistant layer according to the present disclosure, C is a strong austenite forming element, which can substitute nickel to some extent, promote austenite formation, and stabilise austenitic structure, and meanwhile increase the strength of stainless steel. However, it should be noted that the content of C should not be too high. When the content of carbon is too high, the combination of carbon and chromium will form chromium-rich carbide at the grain boundary, leading to intergranular corrosion. Therefore, in order to exert the beneficial effect of C, in the corrosion resistant layer according to the present disclosure, the mass percentage of C is controlled to satisfy 0<C≤0.08%.

In some preferred embodiments, in order to obtain better technical effects, the mass percentage of C is preferably controlled to be between 0.005% and 0.030%.

Si: in the corrosion resistant layer according to the present disclosure, Si is mainly used for deoxidation in the smelting process, and thus a certain amount of silicon is generally contained. However, it should be noted that the content of Si should not be too high as well. When the content of Si is too high, the solubility of nitrogen will be reduced. Therefore, in the corrosion resistant layer according to the present disclosure, the mass percentage of Si is controlled to satisfy 0<Si≤0.75%.

In some preferred embodiments, in order to obtain better technical effects, the mass percentage of Si is preferably controlled to be between 0.3% and 0.6%, more preferably between 0.4 and 0.6%.

Mn: in the corrosion resistant layer according to the present disclosure, Mn is a strong austenitic structure stabilising element and can increase the solubility of nitrogen in the steel. However, manganese has a negative effect on the corrosion resistance of austenitic stainless steel at the same time. Therefore, by balancing the beneficial effects and adverse effects of Mn, the mass percentage of Mn in the corrosion resistant layer according to the present disclosure is controlled to satisfy 0<Mn≤2.0%.

In some preferred embodiments, in order to obtain better technical effects, the mass percentage of Mn is preferably controlled to be between 0.5% and 1.5%, more preferably between 1.10% and 1.25%.

Ni: in the corrosion resistant layer according to the present disclosure, Ni is the most important element to form and stabilise the austenite phase, and the addition of an appropriate amount of Ni can ensure the austenitic structure formation of the steel at room temperature. However, nickel is expensive, and in order to ensure a relatively low cost, the mass percentage of Ni in the corrosion resistant layer according to the present disclosure is controlled to be between 10.00% and 14.00%.

In some preferred embodiments, in order to obtain better technical effects, the mass percentage of Ni is preferably controlled to be between 12.00% and 14.00%.

Cr: in the corrosion resistant layer according to the present disclosure, Cr is a guarantee for obtaining the stainlessness and corrosion resistance of stainless steel, and generally the minimum chromium content for obtaining corrosion resistance is 10.5%. Since chromium is an element that significantly enhances corrosion resistance, in order to ensure good corrosion resistance, the content of chromium in the steel of the present disclosure is controlled to be 16.0% or more. However, chromium is the main ferrite forming element, and it will be difficult to ensure the austenite structure in the cladding at room temperature if the content of chromium is too high. Therefore, in the corrosion resistant layer according to the present disclosure, the mass percentage of Cr is controlled to be between 16.00% and 18.00%.

In some preferred embodiments, in order to obtain better technical effects, the mass percentage of Cr is preferably controlled to be between 16.50% and 17.50%.

Mo: in the corrosion resistant layer according to the present disclosure, Mo is an important element for improving the corrosion resistance, and its mechanism is to stabilise the passivation film and promote the enrichment of chromium in the passivation film. Molybdenum can also synergise with nitrogen to further improve the pitting corrosion resistance. Thus, the main function of adding molybdenum is to improve the corrosion resistance. It should be noted that the content of Mo should not be too high as well. When the content of molybdenum is too high, the cost of the alloy will be increased. **In** order to ensure a relatively low cost, in the corrosion resistant layer according to the present disclosure, the mass percentage of Mo is controlled to be between 2.00% and 3.00%.

In some preferred embodiments, in order to obtain better technical effect, the mass percentage of Mo is preferably controlled to be between 2.50% and 3.00%.

N: in the corrosion resistant layer according to the present disclosure, N is a very strong element that forms, stabilises and enlarges the austenite region, and adding an appropriate amount of N can effectively increase the pitting corrosion resistance of stainless steel. However, when the content of nitrogen is too high, the risk of formation of nitrogen-containing intermetallic phases will increase, and at the same time, the difficulty of smelting and thermal processing will increase, resulting in difficult production. Therefore, in the corrosion resistant layer according to the present disclosure, the mass percentage of N is controlled to be between 0.02% and 0.20%.

In some preferred embodiments, in order to obtain better technical effects, the mass percentage of N is preferably controlled to be between 0.05% and 0.15%.

Accordingly, it should be noted that in the corrosion resistant layer according to the present disclosure, while controlling the mass percentage of a single chemical element, it is also preferable to control the elements Cr, Mo and N to satisfy the following inequality: $Cr+3.3\times Mo+16\times N \geq 25\%$. Each element in the formula represents the content of the corresponding element in percentage by mass. Through such control, it can be further ensured that the corrosion resistant layer exhibits quite excellent corrosion resistance in an ozone environment.

Preferably, the chemical elements of the corrosion resistant layer in percentage by mass satisfy at least one of:

C: 0.005-0.030%;
Si: 0.3-0.6%;
Mn: 0.5-1.5%;
Ni: 12.00-14.00%;
Cr: 16.50-17.50%;
Mo: 2.50-3.00%;
N: 0.05-0.15%; and

$$Cr+3.3×Mo+16×N≥26\%.$$

In the corrosion resistant layer, the inevitable impurities include: S≤0.030%; and P≤0.045%.

In the corrosion resistant layer of the tube according to the present disclosure, both P and S are inevitable impurity elements, and in order to ensure the quality of the steel, the lower the content of impurity elements in the steel, the better when the conditions permit.

S: in the corrosion resistant layer according to the present disclosure, S is a harmful impurity element. Therefore, the mass percentage of S in the corrosion resistant layer needs to be strictly controlled, and is controlled to satisfy S≤0.030%. Preferably, the mass percentage of S can be controlled to be 0-0.005%.

P: in the corrosion resistant layer according to the present disclosure, P is a harmful impurity element. Therefore, the mass percentage of P in the corrosion resistant layer needs to be strictly controlled, and is controlled to satisfy: P≤0.045%. Preferably, the mass percentage of P can be controlled to be 0-0.035%.

Preferably, the corrosion resistant layer is a single-layer corrosion resistant layer having a thickness accounting for 0.5% to 20% of the total thickness of the tube.

Preferably, the base layer further includes at least one of:

$$0<B≤0.0003\%;$$

$$0<Ni≤0.20\%;$$

$$0<Cr≤0.20\%;$$

and

$$0<Mo≤0.10\%.$$

In the above technical solution of the present disclosure, in order to further optimize the quality of the base layer steel, it is preferred that the base layer is further added with the elements B, Ni, Cr and Mo.

Preferably, the chemical elements of the base layer in percentage by mass satisfy at least one of:

C: 0.01-0.18%;
Si: 0.10-0.30%;
Mn: 0.50-1.50%;
Al: 0.02-0.03%;
Ti: 0.005-0.015%; and
Nb: 0.005-0.015%.

In the present disclosure, in order to ensure good mechanical properties of the tube according to the present disclosure, the chemical element composition of the base layer carbon steel is selected to ensure both high strength and good processability.

Thus, in the present disclosure, the design principle of each chemical element in the base layer carbon steel is as follows.

C: in the base layer of the present disclosure, C is an austenite stabilising element, which can function as solid solution strengthening in the steel and can significantly increase the strength of the steel. However, it should be noted that the content of C in the steel should not be too high. When the content of C in the steel is too high, not only the weldability and toughness of the material are disadvantageous, but also hard phase structures such as pearlite and martensite-austenite islands tend to increase, which will adversely affect the corrosion resistance of the steel. Therefore, considering the matching of strength and toughness of the steel sheet and the requirement for the corrosion resistance of the carbon steel material, in the base layer steel according to the present disclosure, the mass percentage of C is controlled to be between 0.01% and 0.20%.

In the present disclosure, the amount of C added is controlled to be 0.01-0.20%, which can not only ensure that the steel sheet can obtain certain hardness and strength under the condition of air cooling after rolling, but also avoid the deterioration of the weldability of the base layer steel. Especially for a highly corrosion-resistant clad sheet (corrosion resistant layer slab + base layer slab) with the thickness of the corrosion resistant layer accounting for 0.5% to 20% of the total thickness, the carbon content of the base layer steel should be controlled to be within the above range.

In order to obtain better technical effect, the mass percentage of C is preferably controlled to be between 0.01% and 0.18%.

Si: in the base layer of the present disclosure, adding Si into the steel can effectively improve the purity and deoxidation of steel. Si can play a role in solid solution strengthening in the steel, but Si is not conducive to the weldability of materials; in the present disclosure, the silicon content of the base layer carbon steel is controlled to be less than or equal to 0.5%, which will not have any influence on the corrosion resistance of the corrosion resistant layer, and the base layer carbon steel has good weldability. Thus, in the base layer according to the present disclosure, the mass percentage of Si is controlled to be between 0.10% and 0.50%.

In order to obtain better technical effect, the mass percentage of Si is preferably controlled to be between 0.10% and 0.30%.

Mn: in the base layer according to the present disclosure, adding an appropriate amount of Mn in the steel can delay the pearlite transformation, reduce the critical cooling rate and improve the hardenability of the steel; at the same time, Mn also has the function of solid solution strengthening, and is the main solid solution strengthening element in the steel. However, it should be noted that Mn should not be added too much. When the content of Mn in the steel is too high, segregation bands and martensite structure are prone to occur, which will have an adverse effect on the toughness of the steel, and the segregation bands will also reduce the corrosion resistance of the steel. The amount of Mn added depends mainly on the strength grade of the steel. Generally, the manganese content of the low carbon microalloy steel does not exceed 2.0%. In this case, Mn contained in the base layer carbon steel does not adversely affect the corrosion resistant layer. Based on this, in the base layer according to the present disclosure, the mass percent of Mn is controlled to be between 0.50% and 2.00%.

In order to obtain better technical effect, the mass percentage of Mn is preferably controlled to be between 0.50% and 1.50%.

Al: in the base layer according to the present disclosure, Al is a strongly deoxidising element. In order to ensure that the content of oxygen in the steel is as low as possible, the mass percentage of Al is controlled to be between 0.02% and 0.04%. The excessive Al after deoxidation can combine with N in the steel to form AlN precipitates, thus improving the strength of the steel and refining the austenite grain size of the steel during heat treatment. In order to obtain better technical effect, the mass percentage of Al is preferably controlled to be between 0.02% and 0.03%.

Ti: in the base layer according to the present disclosure, Ti is a strong carbide-forming element, and adding a small amount of Ti into the steel is beneficial to fixing N in the steel, and TiN formed by the combination of Ti and N can make the matrix austenite grain of the base layer not excessively grow when the base slab is heated, and refine the original austenite grain size. In addition, Ti can be combined with carbon and sulfur in the steel to form TiC, TiS, $Ti_4C_2S_2$, etc., which can be present in the form of inclusions and second phase particles. These carbonitride precipitates of Ti can also prevent grain growth in the heat affected zone during welding, and improve the weldability of the base layer carbon steel. Based on this, in the base layer according to the present disclosure, the mass percentage of Ti is controlled to be between 0.005% and 0.018%.

In order to obtain better technical effect, the mass percentage of Ti is preferably controlled to be between 0.005% and 0.015%.

Nb: in the base layer of the present disclosure, Nb is a strong carbide-forming element, and a small amount of Nb is added into the steel mainly to increase the recrystallisation temperature to match the high final rolling temperature of the clad sheet formed by the base layer slab and the corrosion resistant layer slab in the subsequent rolling process, so that the grain of the base layer is refined after rolling in the recrystallisation and non-recrystallisation zones, which is beneficial to the improvement of the low-temperature impact toughness of the base layer. Based on this, in the base layer according to the present disclosure, the mass percentage of Nb is controlled to be between 0.005% and 0.020%.

In order to obtain better technical effects, the mass percentage of Nb is preferably controlled to be between 0.005% and 0.015%.

N: in the base layer of the present disclosure, N can form second phase particles with titanium and aluminum to refine grains and improve strength. However, when the mass percentage of N is too high, the amount of TiN formed is too large and the particles are too coarse, affecting the plasticity of the cladded substrate of the present disclosure. Based on this, in the base layer according to the present disclosure, the mass percentage of N is controlled to be N≤0.006%.

B: in the present disclosure, B can greatly improve the hardenability of the steel. In view of the air cooling after rolling of highly corrosion-resistant clad sheet (corrosion resistant layer slab + base layer slab), it is required to obtain the structure of ferrite + pearlite as much as possible and inhibit the formation of bainite, especially for highly corrosion-resistant steel sheet and strip with the thickness of the corrosion resistant layer being within the range of 0.5% to 5% of the total thickness. Therefore, in the present disclosure, it is required to control the addition amount of B in the base layer to satisfy 0<B≤0.0003%.

Ni: in the present disclosure, Ni is an element for stabilising austenite, and plays a certain role in improving the strength of the steel. In addition, adding an appropriate amount of Ni to the steel, especially to quenched and tempered steel, can greatly improve the low-temperature impact toughness of the steel. Based on this, in the base layer according to the present disclosure, an appropriate amount of Ni can be added, and the addition amount of Ni is controlled to satisfy 0<Ni≤0.20%.

Cr: in the present disclosure, the segregation tendency of Cr is smaller than that of Mn. When the Mn content of the base layer carbon steel is high and there are obvious segregation bands and banded structures in the steel, the content of Mn can be appropriately reduced, and the insufficient portion is replaced with Cr. Secondly, adding an appropriate amount of Cr to the matrix carbon steel is also beneficial to suppressing the diffusion of Cr of the corrosion resistant layer to the base layer. Based on this, in the base layer according to the present disclosure, Cr satisfying 0 <Cr≤0.20% can be added.

Mo: in the present disclosure, Mo can significantly refine the grains and improve the strength and toughness of the steel. In addition, Mo can also reduce the tempering brittleness of the steel, and at the same time, very fine carbides can be precipitated during tempering, which significantly strengthens the matrix of the steel. In addition, the addition of Mo also contributes to suppressing the self-tempering brittleness which is easily generated in the steel sheet during air cooling. Based on this, in the base layer according to the present disclosure, an appropriate amount of Mo can be added, and the addition amount of Mo is controlled to satisfy 0<Mo≤0.10%.

In the base layer, the inevitable impurities include: S≤0.010%; and P≤0.015%.

In the above technical solution of the present disclosure, both P and S belong to the inevitable impurity elements in the base layer, and S will be combined with Mn in the steel to form plastic inclusions of manganese sulfide, which is especially unfavorable to the transverse plasticity and toughness of the steel, so the content of S in the base layer should be as low as possible. In addition, P is also a harmful element in the steel, which will seriously damage the plasticity and toughness of the steel sheet.

For the present disclosure, both S and P are inevitable impurity elements, so the lower the contents, the better. Considering the actual steelmaking level of steel mills, in the base layer of the present disclosure, S and P are controlled to satisfy: S≤0.010%; and P≤0.015%.

Preferably, the corrosion resistant layer is a single-layer corrosion resistant layer having a thickness accounting for 0.5% to 20% of the total thickness of the tube.

In the present disclosure, according to the operating conditions, the selection of the thickness of the corrosion resistant layer plays a crucial role in obtaining good corrosion resistance, mechanical properties and formability of the tube. If the corrosion resistant layer is too thick, the mechanical properties and production cost of the material will be affected; however, if the corrosion resistant layer is too thin, the corrosion resistance and service life of the material will be reduced. For this reason, in the present disclosure, the corrosion resistant layer has a thickness controlled to account for 0.5% to 20% of a total thickness of the clad slab, preferably 2.5% to 10%, of the total thickness of the tube.

The base layer has a microstructure of ferrite + pearlite or ferrite + pearlite + bainite; and the corrosion resistant layer has a microstructure of austenite.

Preferably, the tube has a yield strength of ≥435 MPa, a tensile strength of ≥590 MPa, an elongation of ≥30%, preferably ≥32%, and a uniform corrosion rate of the corrosion resistant layer in an ozone environment of ≤0.05 mm/year.

Correspondingly, another object of the present disclosure is to provide a method for manufacturing the above-mentioned tube, which is simple and feasible, can effectively prepare the above-mentioned tube, and can break the limitation of the thickness of the corrosion resistant layer and control the thickness of the corrosion resistant layer within the range of 0.5% to 20% of the total thickness of the tube.

In order to achieve the above object, the present disclosure provides a method for manufacturing the above-mentioned tube, including the following steps:

(1) preparing a corrosion resistant layer slab and a base layer slab;
(2) assembling the corrosion resistant layer slab and the base layer slab to obtain a clad slab, wherein the single-layer corrosion resistant layer preferably has a thickness accounting for 0.5% to 20% of the total thickness of the clad slab, more preferably 2.5% to 10%, of the total thickness of the clad slab;
(3) heating and rolling: heating the clad slab at the temperature of 1100 to 1200 °C, and then performing multi-pass rolling within the austenite recrystallisation and non-recrystallisation temperature ranges of the base layer slab and the corrosion resistant layer slab, wherein the total reduction rate is not less than 90%, and the final rolling is performed at a temperature of not less than 900 °C;

(4) coiling: after water cooling, controlling the coiling to be performed at a temperature of 500 to 650 °C to obtain a hot rolled coil;

(5) performing surface treatment on the hot rolled coil; and

(6) tube making.

In the present disclosure, on the basis of reasonable design of chemical composition, the inventors have designed a new manufacturing method in an optimised manner through extensive research, and the ozone corrosion resistant high-strength tube can be effectively prepared by this method.

In the manufacturing method according to the present disclosure, the corrosion resistant layer slab and the base layer slab can be prepared by smelting and casting according to the chemical composition design, and then the corrosion resistant layer slab and the base layer slab are assembled to obtain a highly corrosion-resistant clad sheet (corrosion resistant layer sheet + base layer sheet). The obtained highly corrosion-resistant clad sheet is then heated, rolled, and coiled to obtain a hot rolled coil having a clad interlayer structure, and the hot rolled coil is subjected to surface treatment and then to tube making, so as to obtain the tube according to the present disclosure.

In the present disclosure, the inventors design the heating and rolling processes in step (3) in an optimized manner to ensure that the transition layer structure with a certain thickness can be formed between the corrosion resistant layer and the base layer of the highly corrosion-resistant clad sheet through the processes such as heating and rolling, so as to realize the complete metallurgical combination of the corrosion resistant layer and the base layer, thereby improving the applicability and economic efficiency of the material while ensuring ozone corrosion resistance and mechanical properties.

In step (2) of the manufacturing method according to the invention, the prepared corrosion resistant layer slab and the base layer slab can be pretreated, the peripheries of the bonding surfaces of the slabs are welded and sealed, and the welded and sealed bonding surfaces are vacuumed to complete the assembly of the slabs.

Correspondingly, in step (5), the hot rolled coil is subjected to surface treatment, which can be achieved through acid pickling or mechanical descaling. In addition, in the tube making process in step (6), the conventional spiral welding method or longitudinal welding method can be adopted for forming and welding. The welding methods can be selected from submerged arc welding, metal gas arc welding, tungsten inert gas welding, plasma arc welding, welding rod arc welding, high-frequency welding or laser welding.

Preferably, in the manufacturing method according to the present disclosure, in step (3), the temperature at which the final rolling is performed is controlled to be 920 to 1000 °C.

Preferably, in the manufacturing method according to the present disclosure, a step of preheating is further included between step (2) and step (3), wherein the preheating is performed at a temperature of 1150 to 1250 °C.

In the manufacturing method according to the present disclosure, depending on the performance requirements of the finished product, it can also be determined whether to perform a preheating process between step (2) and step (3). In the preheating process, the clad slab obtained by assembling the slabs can be heated at the temperature of 1150 to 1250 °C, so that a uniform austenitised structure can be obtained in the corrosion resistant layer on the surface of the clad slab, and the previously possible carbides can be completely dissolved as much as possible, and at the same time, the compounds of alloy elements such as niobium and titanium in carbon steel can be completely or partially dissolved; the elements of the corrosion resistant layer and the carbon steel base layer diffuse at the interface to form a stable transition layer, and then slowly cool to room temperature.

Preferably, in the manufacturing method according to the present disclosure, cold rolling and annealing are further included between step (5) and step (6).

In the manufacturing method according to the present disclosure, if the target product before tube making is a cold rolled coil instead of a hot rolled coil in actual use, cold rolling and annealing steps can be further added between step (5) and step (6), which can be achieved by cold rolling to a target thickness and then annealing. Preferably, the annealing is performed at a temperature of 900 to 1000 °C.

Therefore, in the present disclosure, an ozone-resistant corrosion resistant layer is formed by rolling process on the surface of the base layer of carbon steel sheet through the composition design as well as ratio design of the corrosion resistant layer and the base layer, and a sheet/strip with ozone corrosion resistance, good mechanical properties and high economic efficiency is finally formed, which is further processed into a tube, for use in the pipelines and equipment for the water supply plants in the ozone corrosive medium environment.

It should be noted that the difficulties in the design in the present disclosure include:

1) the composition designs of the corrosion resistant layer and the base layer need to meet the overall properties of the material. The composition of the corrosion resistant layer needs to be designed according to the characteristics of ozone corrosion to meet the requirements of corrosion resistance under working conditions. For the composition design of carbon steel of the base layer, besides meeting the requirements of mechanical properties, it is also necessary to consider that when the carbon content of the transition layer at the joint of the corrosion resistant layer and the base layer is high, there lacks stabilising element, and there will be obvious decarbonisation layer on one side of the carbon steel at the joint of interfaces, and the structure of the carbon steel substrate is uneven, so that after processing, surface defects are prone to occur, and the mechanical properties may also fail to meet the standards.

2) the ratio of the corrosion resistant layer to the matrix metal, and the difference in the material properties will cause the heating process, the rolling process, and the heat treatment process to be difficult to control. For example, uneven temperature during the heating process can cause deformation and bulging, resulting in an inability to bond with the base layer. For example, it is likely to be separated from the matrix and cracks during rolling, and the uniformity of thickness is difficult to ensure.

3) for pipelines and equipment used for water supply plants in ozone corrosive medium environment, such as pipelines between ozone generators, ozone dosing devices, and water outlet pipes of a pre-ozone contact tank and an ozone contact tank, if the initial cladding is not completed and the bonding quality is poor, then after subsequent processing steps like acid pickling, tube making and forming, welding, etc., the continuity and uniformity of the corrosion resistant layer of the finished product cannot be guaranteed. This will pose significant risks to the applicability, safety, and durability of the equipment and pipelines.

In the present disclosure, the inventors have successfully overcome the above difficulties through reasonable design, and have prepared and obtained the ozone corrosion resistant high-strength tube according to the present disclosure.

Compared with the prior art, the ozone corrosion resistant high-strength tube and the manufacturing method therefor according to the present disclosure have exhibited the following advantages and beneficial effects:

In the present disclosure, the inventors take into consideration the operating conditions of pipelines and equipment used for water supply plants in the ozone corrosive medium environment at present. Through the composition design and ratio design of the corrosion resistant layer and the base layer, the corrosion resistant layer and the base layer are combined and assembled, and subjected to suitable heating, rolling and coiling processes, as well as a tube making process so as to obtain a tube having ozone corrosion resistance, good mechanical properties, and high economic efficiency. The tube has a yield strength of $\geq$435 MPa, a tensile strength of $\geq$590 MPa, an elongation of $\geq$30%, and a uniform corrosion rate of the corrosion resistant layer in the ozone environment of $\leq$0.05 mm/year.

In the present disclosure, a transition layer structure with a certain thickness is formed between the corrosion resistant layer and the base layer by the processes of heating, rolling and the like, and the complete metallurgical bonding of the corrosion resistant layer and the base layer is achieved, so as to improve the applicability and economic efficiency of the material while ensuring the ozone corrosion resistance and mechanical properties.

By using the tube manufactured by the above composition design and process control method, the essential pain point of 316 stainless steel or carbon steel used by the water supply plants in the ozone corrosive medium environment can be solved; the tube can be used as pipelines and equipment used in the water supply plants in the ozone corrosive medium environment, such as pipelines between ozone generators, ozone dosing devices, and outlet pipes of pre-ozone contact tanks and ozone contact tanks, can meet the requirements of these pipelines and equipment for the ozone corrosion resistance and mechanical properties, greatly improve the applicability, safety and durability of these pipelines and equipment, and meanwhile avoid secondary pollution to water, exhibiting great economic and social benefits. Compared with 316 stainless steel tubes used as pipelines between ozone generators, ozone dosing devices, and outlet pipes of pre-ozone contact tanks and ozone contact tanks in water supply plants, the tube according to the present disclosure exhibits higher strength, simpler welding and machining, better corrosion resistance, and higher economic efficiency. Compared with the carbon steel tube used in the water outlet pipes behind valves of the pre-ozone contact tank and the ozone contact tank, it is possible to omit the process of applying corrosion-resistant coating to tube for the tube according to the present disclosure, while exhibiting corrosion resistance and durability that carbon steel tubes cannot match, and being more energy-saving, environment-friendly and maintenance-free.

## BRIEF DESCRIPTION OF DRAWINGS

FIG. 1 is a schematic diagram of the interlayer structure of a tube with two corrosion resistant layers.
FIG. 2 is a schematic diagram of the interlayer structure of a tube according to another embodiment of the present disclosure;
FIG. 3 is a photograph of the microstructure of the bonding interface between the base layer and corrosion resistant layer of the tube in Example 5; and
FIG. 4 is a photograph of the microstructure of the base layer of the tube in Example 5.

## DETAILED DESCRIPTION

A tube and a manufacturing method therefor according to the present disclosure will be further explained and illustrated with reference to the accompanying drawings and the specific embodiments, which are, however, not intended to unduly limit the technical solution of the present disclosure.

### Examples 1 to 6 and Comparative Example 1

Table 1 lists the chemical elements in percentage by mass in corrosion resistant layers of tubes in Examples 1 to 6 and Comparative Example 1.

Table 1 (wt%, the balance being Fe and other inevitable impurities other than P and S)

| No. | C | Si | Mn | Ni | Cr | Mo | N | P | S | Cr+3.3×Mo+16×N |
|---|---|---|---|---|---|---|---|---|---|---|
| Example 1 | 0.012 | 0.50 | 1.18 | 12.80 | 16.80 | 2.62 | 0.06 | 0.030 | 0.001 | 26.4 |
| Example 2 | 0.005 | 0.40 | 1.25 | 11.60 | 18.00 | 2.00 | 0.20 | 0.028 | 0.002 | 27.8 |
| Example 3 | 0.080 | 0.75 | 0.10 | 14.00 | 16.00 | 3.00 | 0.02 | 0.045 | 0.030 | 26.2 |
| Example 4 | 0.015 | 0.45 | 1.10 | 10.18 | 16.70 | 2.16 | 0.08 | 0.032 | 0.002 | 25.1 |
| Example 5 | 0.022 | 0.52 | 1.16 | 12.78 | 17.20 | 2.75 | 0.15 | 0.031 | 0.002 | 28.7 |
| Example 6 | 0.020 | 0.45 | 1.20 | 12.78 | 16.20 | 3.00 | 0.08 | 0.030 | 0.001 | 27.4 |
| Example 7 | 0.020 | 0.45 | 2.0 | 12.78 | 16.20 | 2.98 | 0.07 | 0.030 | 0.001 | 27.2 |
| Comparative Example 1 | 0.026 | 0.38 | 1.36 | 10.08 | 16.20 | 2.05 | 0.04 | 0.031 | 0.002 | _**23.6**_ |

Note: In Table 1 above, each element in formula Cr+3.3×Mo+16×N represents the mass percentage of the corresponding element.

Table 2 lists the chemical elements in percentage by mass in base layers of tubes in Examples 1 to 6 and Comparative Example 1.

Table 2 (wt%, the balance being Fe and other inevitable impurities other than P and S)

| No. | C | Si | Mn | Al | Ti | Nb | N | B | Ni | Cr | Mo | P | S |
|---|---|---|---|---|---|---|---|---|---|---|---|---|---|
| Example 1 | 0.01 | 0.50 | 2.00 | 0.030 | 0.010 | 0.018 | 0.0060 | 0.0002 | 0.20 | - | - | 0.015 | 0.010 |
| Example 2 | 0.14 | 0.25 | 1.00 | 0.030 | 0.014 | 0.011 | 0.0052 | 0.0002 | - | 0.20 | - | 0.010 | 0.005 |
| Example 3 | 0.20 | 0.15 | 0.50 | 0.020 | 0.005 | 0.005 | 0.0040 | 0.0001 | - | 0.10 | - | 0.008 | 0.004 |
| Example 4 | 0.11 | 0.30 | 1.48 | 0.026 | 0.008 | 0.010 | 0.0038 | - | - | - | - | 0.008 | 0.005 |
| Example 5 | 0.10 | 0.35 | 1.50 | 0.040 | 0.018 | 0.020 | 0.0045 | 0.0003 | - | - | 0.10 | 0.010 | 0.005 |
| Example 6 | 0.10 | 0.40 | 1.55 | 0.040 | 0.015 | 0.020 | 0.0045 | 0.0003 | - | - | 0.10 | 0.008 | 0.004 |
| Example 7 | 0.10 | 0.40 | 1.55 | 0.040 | 0.015 | 0.020 | 0.0045 | 0.0003 | - | - | 0.10 | 0.008 | 0.004 |
| Comparative Example 1 | 0.08 | 0.20 | 0.85 | 0.028 | 0.009 | 0.012 | 0.0035 | 0.0002 | 0.10 | 0.15 | - | 0.011 | 0.003 |

The tubes in Examples 1 to 6 and Comparative Example 1 of the present disclosure were manufactured by the following steps:

(1) In accordance with the chemical composition shown in Table 1 and Table 2, smelting and casting were performed to prepare a corrosion resistant layer slab and a base layer slab, respectively.
(2) The corrosion resistant layer slab and the base layer slab were assembled to obtain a clad slab: the thickness of the corrosion resistant layer was controlled to be 0.5% to 20% of the total thickness of the clad slab, the corrosion layer slab and the base layer slab were subjected to pre-treatment, the peripheries of the bonding surfaces of the slabs were welded and sealed, and the welded and sealed bonding surfaces were vacuumed; whether to perform a preheating process was determined according to the performance requirements of the finished product after the slabs were assembled, and if preheating was required, the preheating temperature was controlled to be 1150 to 1250 °C.

(3) heating and rolling: the clad slab was heated at the temperature of 1100 to 1200 °C, then multi-pass rolling was performed within the temperature ranges of austenite recrystallisation and non-recrystallisation of the base layer slab and the corrosion resistant layer slab, the total reduction rate was controlled to be not less than 90%, and the final rolling was performed at a temperature of not less than 900 °C, preferably, the final rolling was performed at a temperature between 920 °C and 1000 °C.

(4) coiling: after water cooling, the coiling was controlled to be performed at a temperature of 500 to 650 °C to obtain a hot rolled coil.

(5) acid pickling or mechanical descaling was adopted to perform surface treatment on the hot rolled coil; if the target product was a cold rolled coil, cold rolling and annealing processes were further performed, followed by annealing after cold rolling to the target thickness.

(6) tube making: a spiral welding method or longitudinal welding method was adopted for forming and welding; and tube making was performed through the welding methods selected from submerged arc welding, metal gas arc welding, tungsten inert gas welding, plasma arc welding, welding rod arc welding, high-frequency welding or laser welding.

It should be noted that in the present disclosure, the tubes in Examples 1 to 6 of the present disclosure were all manufactured using the process of the above steps (1)-(6), and the chemical composition and related process parameters all met the control requirements of the design specification of the present disclosure.

Table 3 lists the specific process parameters of the tubes in Examples 1 to 6 and Comparative Example 1 in the steps of the manufacturing process described above.

Table 3

| No. | Step (2) | Step (3) | | | | Step (4) | Step (5) | | | | |
|---|---|---|---|---|---|---|---|---|---|---|---|
| | Thickness of single-layer corrosion resistant layer accounting for total thickness of tube (%) | Preheating temperature (°C) | Heating temperature (°C) | Total rolling reduction rate (%) | Final rolling temperature (°C) | Coiling temperature | Thickness of hot rolled sheet (mm) | Thickness of corrosion resistant layer of hot rolled sheet (μm) | Annealing temperature of cold rolling (°C) | Thickness of cold rolled sheet (mm) | Thickness of corrosion resistant layer of cold rolled sheet (μm) |
| Example 1 | 2.5 | 1240 | 1170 | 97.7 | 980 | 620 | 4 | 100 | 1000 | 1.2 | 30 |
| Example 2 | 10 | 1250 | 1160 | 95.5 | 1000 | 620 | 8 | 1350 | - | - | - |
| Example 3 | 1.3 | 1180 | 1140 | 97.7 | 990 | 550 | 4 | 50 | 900 | 2.0 | 25 |
| Example 4 | 10 | 1200 | 1180 | 93.3 | 980 | 580 | 12 | 2000 | - | - | - |
| Example 5 | 10 | 1250 | 1200 | 94.4 | 920 | 500 | 10 | 2000 | - | - | - |
| Example 6 | 10 | 1250 | 1200 | 95.6 | 920 | 500 | 14 | 2000 | - | - | - |
| Example 7 | 20 | 1250 | 1200 | 95.6 | 920 | 500 | 14 | 2000 | - | - | - |
| Comparative Example 1 | 16.7 | 1250 | 1200 | 96.7 | 950 | 600 | 6 | 1000 | - | - | - |

It should be noted that according to the process parameters shown in Table 3 above, in Examples 1 and 3, after step (5) of performing surface treatment on the hot-rolled coils, cold rolling and annealing were further performed, thereby obtaining cold rolled sheets; and in Example 2, Example 4, Example 5, Example 6 and Comparative Example 1, hot rolled sheets were obtained after step (5).

Accordingly, the sheets prepared according to Examples and Comparative Example can be further used to prepare corresponding tubes in the tube making process in step (6).

The tubes in Examples 1 to 6 and Comparative Example 1 prepared using the above process were sampled respectively, the microstructures of the sample tubes in Examples 1 to 6 and Comparative Example 1 were further observed, and after the microstructures of the tubes were observed, the sample tubes in Examples 1 to 6 and Comparative Example 1 were further subjected to mechanical property tests and ozone corrosion resistance tests, and the test results were shown in Table 4 below.

Related performance testing methods were as follows:

Mechanical property test: according to GB/T 6396-2008 *Clad Steel Plates-Mechanical and Technological Test*, the yield strength, tensile strength and elongation of the sample tubes in Examples 1 to 6 and Comparative Example 1 were obtained.

Ozone corrosion resistance test: using the "Coupon testing method for specific application scenarios", the test coupons were placed in a water outlet pipes of a pre-ozone contact tank of a water supply plant; and after 3 months, the test coupons were taken out to observe the surface condition of the corrosion resistant layer to see if there was any corrosion phenomenon, thereby the ozone corrosion resistance of the sample tubes in Examples 1 to 6 and Comparative Example 1 were obtained.

Table 4 lists test results for microstructure, mechanical properties and ozone corrosion resistance of the tubes in Examples 1 to 6 and Comparative Example 1.

Table 4

| No. | Yield strength (MPa) | Tensile strength (MPa) | Elongation (%) | Ozone corrosion resistance | Microstructure | |
|---|---|---|---|---|---|---|
| | | | | | Base layer | Corrosion resistant layer |
| Example 1 | 435 | 590 | 40.0 | No corrosion phenomenon | Ferrite-pearlite | Austenite |
| Example 2 | 492 | 635 | 37.0 | No corrosion phenomenon | Ferrite-pearlite | Austenite |
| Example 3 | 480 | 650 | 40.0 | No corrosion phenomenon | Ferrite-pearlite-bainite | Austenite |
| Example 4 | 482 | 638 | 38.0 | No corrosion phenomenon | Ferrite-pearlite | Austenite |
| Example 5 | 516 | 636 | 32.0 | No corrosion phenomenon | Ferrite-pearlite-bainite | Austenite |
| Example 6 | 517 | 650 | 30.0 | No corrosion phenomenon | Ferrite-pearlite-bainite | Austenite |
| Example 7 | 505 | 645 | 30.5 | No corrosion phenomenon | Ferrite-pearlite-bainite | Austenite |
| Comparative Example 1 | 510 | 618 | 38.0 | **Slight corrosion** | Ferrite-pearlite-bainite | Austenite |

It can be seen in combination with the above Table 4 that in the present disclosure, the tubes in Examples 1 to 6 exhibited a yield strength of 435 MPa to 516 MPa, a tensile strength of 590 MPa to 650 MPa and an elongation of 30.0% to 40.0%, and exhibited excellent ozone corrosion resistance, none of the corrosion resistant layers were corroded in the ozone environment after 3 months; while the final corrosion layer in Comparative Example 1 was slightly corroded due to the composition design of the corrosion resistant layer not satisfying the design requirements of the present disclosure.

As can be seen from the above examples, the tube with good mechanical properties and ozone corrosion resistance can be obtained through appropriate material selection, composition design, rolling and heat treatment processes and tube making, which can solve the essential pain point of 316 stainless steel or carbon steel used by the water supply plants in the ozone corrosive medium environment at present, meet the increasing demands of pipelines and equipment used by the water supply plants in the ozone corrosive medium environment for corrosion resistance and mechanical properties, and have great economic and social benefits.

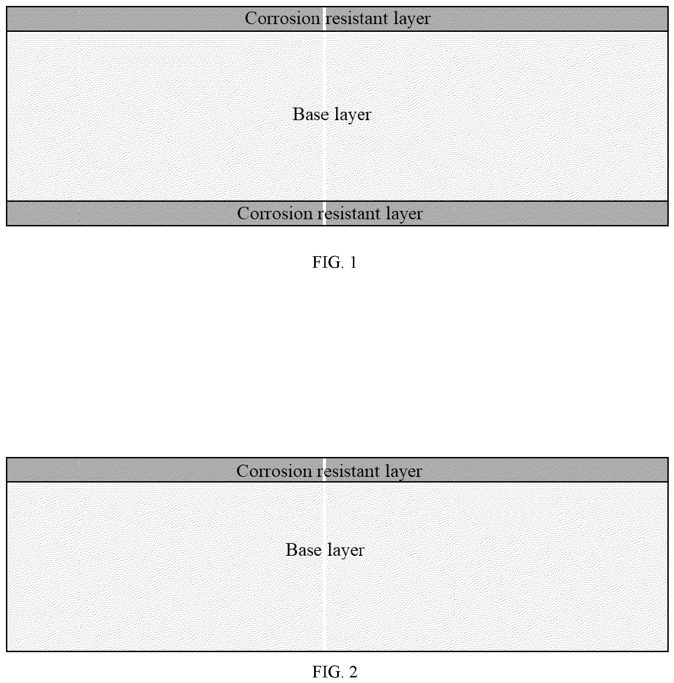

FIG. 1 is a schematic diagram of an interlayer structure of a tube according to one embodiment of the present disclosure.

As shown in FIG. 1, in this embodiment, the tube according to the present disclosure can include two corrosion resistant layers located on the inner and outer surfaces of the tube and a base layer located between the two corrosion resistant layers.

FIG. 2 is a schematic diagram of an interlayer structure of a tube according to another embodiment of the present disclosure.

As shown in FIG. 2, in this embodiment, the tube according to the present disclosure can include a corrosion resistant layer located on the inner surface of the tube and a base layer located on the outer surface of the tube.

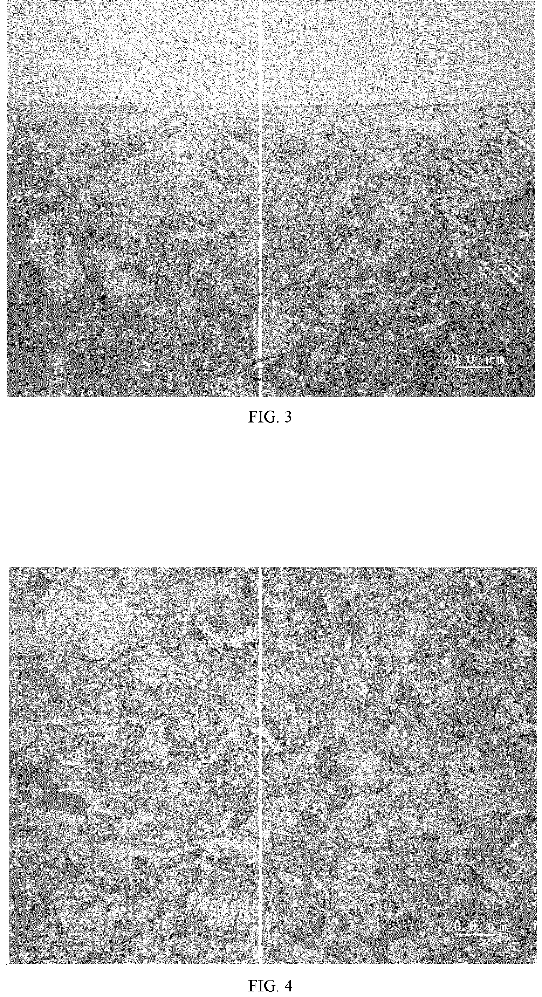

FIG. 3 is a photograph of the microstructure of the bonding interface between the base layer and the corrosion resistant layer of the tube in Example 5.

As shown in FIG. 3, in Example 5, the microstructure of the base layer of the tube was ferrite-pearlite-bainite; the microstructure of the corrosion resistant layer was austenite; accordingly, the elements of the corrosion resistant layer and the base layer diffused at the bonding interface to form a stable transition layer with a diffusion distance of 50 to 100 μm.

FIG. 4 is a photograph of the microstructure of the base layer of the tube in Example 5.

As shown in FIG. 4, in Example 5, the microstructure of the base layer of the tube was ferrite-pearlite-bainite.

It should also be noted that the embodiments listed above are only specific embodiments of the present disclosure.

## Claims

1. A tube, wherein the tube has a single layer corrosion resistant layer and a base layer in a thickness direction, the corrosion resistant layer is at least located on an inner wall of the tube, the corrosion resistant layer has a thickness accounting for 0.5% to 20% of a total thickness of the tube, and the corrosion resistant layer further contains the following chemical elements in percentage by mass:

$$0 < C \leq 0.08\%;$$

$$0 < Si \leq 0.75\%;$$

$$0 < Mn \leq 2.0\%;$$

Ni: 10.00-14.00%;
Cr: 16.00-18.00%;
Mo: 2.00-3.00%; and
N: 0.02-0.20%;
the balance being Fe and inevitable impurities, wherein the inevitable impurities comprise: S≤0.030%; and P≤0.045%;
wherein Cr, Mo and N satisfy the following inequation: Cr+3.3×Mo+16×N≥25%,
the chemical elements of the base layer in percentage by mass are:

C: 0.01-0.20%;
Si: 0.10-0.50%;
Mn: 0.50-2.00%;
Al: 0.02-0.04%;
Ti: 0.005-0.018%;
Nb: 0.005-0.020%;

$$N \leq 0.006\%;$$

and
further including at least one of:

$$0 < B \leq 0.0003\%;$$

$$0 < Ni \leq 0.20\%;$$

$$0 < Cr \leq 0.20\%;$$

and

$$0 < Mo \leq 0.10\%$$

the balance being Fe and inevitable impurities, wherein the inevitable impurities comprise: $S \leq 0.010\%$; and $P \leq 0.015\%$; and

the base layer has a microstructure of ferrite + pearlite or ferrite + pearlite + bainite; and the corrosion resistant layer has a microstructure of austenite.

2. The tube according to claim 1, wherein the chemical elements of the corrosion resistant layer in percentage by mass satisfy at least one of:

C: 0.005-0.03%;
Si: 0.3-0.6%;
Mn: 0.5-1.5%;
Ni: 12.00-14.00%;
Cr: 16.50-17.50%;
Mo: 2.50-3.00%;
N: 0.05-0.15%; and

$$Cr + 3.3 \times Mo + 16 \times N \geq 26\%.$$

3. The tube according to claim 2, wherein the chemical elements of the base layer in percentage by mass satisfy at least one of:

C: 0.01-0.18%;
Si: 0.10-0.30%;
Mn: 0.50-1.50%;
Al: 0.02-0.03%;
Ti: 0.005-0.015%; and
Nb: 0.005-0.015%.

4. The tube according to any one of claims 1 to 3, wherein the corrosion resistant layer has a thickness accounting for 2.5% to 10% of a total thickness of the tube.

5. The tube according to any one of claims 1 to 4, wherein the tube has a yield strength of $\geq$435 MPa, a tensile strength of $\geq$590 MPa, an elongation of $\geq$30%, and a uniform corrosion rate of the corrosion resistant layer in an ozone environment of $\leq$0.05 mm/year.

6. A method for manufacturing the tube according to any of claims 1 to 5, wherein the method comprises the steps of:

(1) preparing a corrosion resistant layer slab and a base layer slab;
(2) assembling the corrosion resistant layer slab and the base layer slab to obtain a clad slab, wherein the corrosion resistant layer is a single-layer corrosion resistant layer;
(3) heating and rolling: heating the clad slab at a temperature of 1100 to 1200 °C, and then performing multi-pass rolling, wherein a total reduction rate is not less than 90%, and a final rolling is performed at a temperature of not less than 900 °C;
(4) coiling: after water cooling, controlling the coiling to be performed at a temperature of 500 to 650 °C to obtain a hot rolled coil;

(5) performing surface treatment on the hot rolled coil; and
(6) tube making.

7. The method according to claim 6, wherein in step (3), the final rolling is performed at a temperature of 920 to 1000 °C.

8. The method according to claim 6, wherein the method further comprises a step of preheating between step (2) and step (3), wherein the preheating is performed at a temperature of 1150 to 1250 °C.

9. The method according to claim 6, wherein the method further comprises cold rolling and annealing between step (5) and step (6), wherein the annealing is preferably performed at a temperature of 900 to 1000 °C.


**Patentansprüche**

1. Ein Rohr, wobei das Rohr eine einlagige korrosionsbeständige Schicht und eine Grundschicht in Dickenrichtung aufweist, wobei die korrosionsbeständige Schicht mindestens an einer Innenwand des Rohrs angeordnet ist, wobei die korrosionsbeständige Schicht eine Dicke von 0,5 % bis 20 % der Gesamtdicke des Rohrs aufweist und wobei die korrosionsbeständige Schicht ferner die folgenden chemischen Elemente in Massenprozent enthält:

$$0 < C \leq 0,08\ \%;$$

$$0 < Si \leq 0,75\ \%;$$

$$0 < Mn \leq 2,0\ \%;$$

Ni: 10,00-14,00 %;
Cr: 16,00-18,00 %;
Mo: 2,00-3,00 %; und
N: 0,02-0,20 %;
der Rest ist Fe und unvermeidbare Verunreinigungen, wobei die unvermeidbaren Verunreinigungen Folgendes umfassen: S $\leq$ 0,030 % und P $\leq$ 0,045 %;
wobei Cr, Mo und N die folgende Ungleichung erfüllen: Cr+3,3$\times$Mo+16$\times$N$\geq$25 %,
die chemischen Elemente der Grundschicht in Massenprozent sind:

C: 0,01-0,20 %;
Si: 0,10-0,50 %;
Mn: 0,50-2,00 %;
Al: 0,02-0,04 %;
Ti: 0,005-0,018 %;
Nb: 0,005-0,020 %;

$$N \leq 0,006\ \%;$$

und
weiterhin mindestens eines der folgenden Elemente:

$$0 < B \leq 0,0003\ \%;$$

$$0 < Ni \leq 0,20\ \%;$$

$$0 < Cr \leq 0,20\ \%;$$

und

$$0 < Mo \leq 0,10\ \%$$

wobei der Rest aus Fe und unvermeidbaren Verunreinigungen besteht, wobei die unvermeidbaren Verunreinigungen Folgendes umfassen: S ≤ 0,010 %; und P ≤ 0,015 %; und
die Grundschicht eine Mikrostruktur aus Ferrit + Perlit oder Ferrit + Perlit + Bainit aufweist; und die korrosionsbeständige Schicht eine Mikrostruktur aus Austenit aufweist.

2. Das Rohr gemäß Anspruch 1, wobei die chemischen Elemente der korrosionsbeständigen Schicht in Massenprozent mindestens eine der folgenden Bedingungen erfüllen:

C: 0,005-0,03 %;
Si: 0,3-0,6 %;
Mn: 0,5-1,5 %;
Ni: 12,00-14,00 %;
Cr: 16,50-17,50 %;
Mo: 2,50-3,00 %;
N: 0,05-0,15 %; und

$$Cr+3,3\times Mo+16\times N \geq 26\ \%.$$

3. Das Rohr gemäß Anspruch 2, wobei die chemischen Elemente der Basisschicht in Massenprozent mindestens eine der folgenden Bedingungen erfüllen:

C: 0,01-0,18 %;
Si: 0,10-0,30 %;
Mn: 0,50-1,50 %;
Al: 0,02-0,03 %;
Ti: 0,005-0,015 %; und
Nb: 0,005-0,015 %.

4. Das Rohr gemäß einem der Ansprüche 1 bis 3, wobei die korrosionsbeständige Schicht eine Dicke aufweist, die 2,5 % bis 10 % der Gesamtdicke des Rohrs ausmacht.

5. Das Rohr gemäß einem der Ansprüche 1 bis 4, wobei das Rohr eine Streckgrenze von ≥ 435 MPa, eine Zugfestigkeit von ≥ 590 MPa, eine Dehnung von ≥ 30 % und eine gleichmäßige Korrosionsrate der korrosionsbeständigen Schicht in einer Ozonumgebung von ≤ 0,05 mm/Jahr aufweist.

6. Ein Verfahren zur Herstellung des Rohrs nach einem der Ansprüche 1 bis 5, wobei das Verfahren die folgenden Schritte umfasst:

(1) Herstellen einer korrosionsbeständigen Schichtplatte und einer Grundschichtplatte;
(2) Zusammenfügen der korrosionsbeständigen Schichtplatte und der Basisschichtplatte, um eine plattierte Platte zu erhalten, wobei die korrosionsbeständige Schicht eine einlagige korrosionsbeständige Schicht ist;
(3) Erhitzen und Walzen: Erhitzen der plattierten Platte auf eine Temperatur von 1100 bis 1200 °C und anschließendes Durchführen eines Mehrfachwalzens, wobei die Gesamtreduktionsrate nicht weniger als 90 % beträgt und ein Endwalzen bei einer Temperatur von nicht weniger als 900 °C durchgeführt wird;
(4) Aufwickeln: Nach dem Wasserkühlen wird das Aufwickeln bei einer Temperatur von 500 bis 650 °C durchgeführt, um ein warmgewalztes Coil zu erhalten;
(5) Durchführen einer Oberflächenbehandlung an dem warmgewalzten Coil; und
(6) Herstellung von Rohren.

7. Das Verfahren gemäß Anspruch 6, wobei in Schritt (3) das Fertigwalzen bei einer Temperatur von 920 bis 1000 °C durchgeführt wird.

8. Das Verfahren gemäß Anspruch 6, wobei das Verfahren ferner einen Schritt des Vorwärmens zwischen Schritt (2) und Schritt (3) umfasst, wobei das Vorwärmen bei einer Temperatur von 1150 bis 1250 °C durchgeführt wird.

9. Das Verfahren gemäß Anspruch 6, wobei das Verfahren ferner Kaltwalzen und Glühen zwischen Schritt (5) und Schritt (6) umfasst, wobei das Glühen vorzugsweise bei einer Temperatur von 900 bis 1000 °C durchgeführt wird.

**Revendications**

1. Tube, dans lequel le tube a une couche résistante à la corrosion en une seule couche et une couche de base dans une direction d'épaisseur, la couche résistante à la corrosion est au moins située sur une paroi interne du tube, la couche résistante à la corrosion a une épaisseur représentant 0,5 % à 20 % d'une épaisseur totale du tube, et la couche résistante à la corrosion contient en outre les éléments chimiques suivants en pourcentage en masse :

$$0 < C \leq 0,08 \% ;$$

$$0 < Si \leq 0,75 \% ;$$

$$0 < Mn \leq 2,0 \% ;$$

Ni : 10,00-14,00 % ;
Cr : 16,00-18,00 % ;
Mo : 2,00-3,00 % ; et
N : 0,02-0,20 % ;
le reste étant du Fe et des impuretés inévitables, dans lequel les impuretés inévitables comprennent : $S \leq 0,030$ % ; et $P \leq 0,045$ % ;
dans lequel Cr, Mo et N satisfont à l'inéquation suivante : Cr + 3,3 x Mo + 16 x N $\geq$ 25 %,
les éléments chimiques de la couche de base en pourcentage en masse sont :

C : 0,01-0,20 % ;
Si : 0,10-0,50 % ;
Mn : 0,50-2,00 % ;
Al : 0,02-0,04 % ;
Ti : 0,005-0,018 % ;
Nb : 0,005-0,020 % ;

$$N \leq 0,006 \% ;$$

et
comportant en outre au moins un parmi :

$$0 < B \leq 0,0003 \% ;$$

$$0 < Ni \leq 0,20 \% ;$$

$$0 < Cr \leq 0,20 \% ;$$

et

$$0 < Mo \leq 0,10 \%$$

le reste étant du Fe et des impuretés inévitables, dans lequel les impuretés inévitables comprennent : $S \leq$ 0,010 % ; et $P \leq 0,015$ % ; et
la couche de base a une microstructure de ferrite + perlite ou ferrite + perlite + bainite ; et la couche résistante à la corrosion a une microstructure d'austénite.

2. Tube selon la revendication 1, dans lequel les éléments chimiques de la couche résistante à la corrosion en pourcentage en masse satisfont à au moins un parmi :

C : 0,005-0,03 % ;
Si : 0,3-0,6 % ;
Mn : 0,5-1,5 % ;

Ni : 12,00-14,00 % ;
Cr : 16,50-17,50 % ;
Mo : 2,50-3,00 % ;
N : 0,05-0,15 % ; et

$$Cr + 3,3 \times Mo + 16 \times N \geq 26\ \%.$$

3. Tube selon la revendication 2, dans lequel les éléments chimiques de la couche de base en pourcentage en masse satisfont à au moins un parmi :

C : 0,01-0,18 % ;
Si : 0,10-0,30 % ;
Mn : 0,50-1,50 % ;
Al : 0,02-0,03 % ;
Ti : 0,005-0,015 % ; et
Nb : 0,005-0,015 %.

4. Tube selon l'une des revendications 1 à 3, dans lequel la couche résistante à la corrosion a une épaisseur représentant 2,5 % à 10 % d'une épaisseur totale du tube.

5. Tube selon l'une des revendications 1 à 3, dans lequel le tube a une limite d'élasticité $\geq$ 435 MPa, une résistance à la traction $\geq$ 590 MPa, un allongement $\geq$ 30 %, et une vitesse de corrosion uniforme de la couche résistante à la corrosion dans un environnement ozoné $\leq$ 0,05 mm/an.

6. Procédé pour fabriquer le tube selon l'une des revendications 1 à 5, dans lequel le procédé comprend les étapes de :

(1) préparation d'une ébauche de couche résistante à la corrosion et d'une ébauche de couche de base ;
(2) assemblage de l'ébauche de couche résistante à la corrosion et de l'ébauche de couche de base pour obtenir une ébauche plaquée, dans lequel la couche résistante à la corrosion est une couche résistante à la corrosion en une seule couche ;
(3) chauffage et laminage : chauffage de l'ébauche plaquée à une température de 1100 à 1200 °C, puis réalisation d'un laminage à plusieurs passages, dans lequel un taux de réduction total n'est pas inférieur à 90 %, et un laminage final est réalisé à une température non inférieure à 900 °C ;
(4) bobinage : après un refroidissement par eau, commande du bobinage devant être réalisé à une température de 500 à 650 °C pour obtenir une bobine laminée à chaud ;
(5) réalisation d'un traitement de surface sur la bobine laminée à chaud ; et
(6) fabrication du tube.

7. Procédé selon la revendication 6, dans lequel à l'étape (3), le laminage final est réalisé à une température de 920 à 1000 °C.

8. Procédé selon la revendication 6, dans lequel le procédé comprend en outre une étape de préchauffage entre l'étape (2) et l'étape (3), dans lequel le préchauffage est réalisé à une température de 1150 à 1250 °C.

9. Procédé selon la revendication 6, dans lequel le procédé comprend en outre un laminage à froid et un recuit entre l'étape (5) et l'étape (6), dans lequel le recuit est de préférence réalisé à une température de 900 à 1000 °C.

Corrosion resistant layer

Base layer

Corrosion resistant layer

FIG. 1

Corrosion resistant layer

Base layer

FIG. 2

FIG. 3

FIG. 4

**EP 4 438 758 B1**

**Patent documents cited in the description**

- WO 2021104417 A

- JP H01152218 B